# EUROPEAN PATENT APPLICATION

(11) **EP 4 509 413 A1**
(43) Date of publication of application: **19.02.2025**
(21) Application number: 24193449.6
(22) Date of filing: 07.08.2024
(51) Int. Cl.: B64F 5/60, G05B 23/02, G06Q 10/20, B64F 5/40, B64D 45/00

(54) **INTEGRAL STRUCTURAL INTEGRITY MANAGEMENT SYSTEM FOR AIRCRAFT**

(30) Priority: 18.08.2023 US 202318452259
(71) Applicant: Lockheed Martin Corporation, Bethesda, Maryland 20817 (US)
(72) Inventor: Brookhart, Andrew M., Stratford, CT, 06614 (US); Sarlashkar, Avinash V., Rochester, NY, 14623-2893 (US)
(74) Representative: Schmitt-Nilson Schraud Waibel Wohlfrom Patentanwälte Partnerschaft mbB

(57) **Abstract**

Systems and methods for structural integrity management system for an aircraft. The system includes an electronic processor configured to receive information regarding damage to a component of the aircraft, update a digital twin model associated with the aircraft based on the received information, and perform a rapid structural analysis using the updated digital twin model. The electronic processor is further configured to determine, based on the results of the rapid structural analysis and either or both of a historic use of the aircraft and a current future usage profile of the aircraft, an actionable direction, and perform the actionable direction.

## Description

Embodiments described herein relate to aircraft structural integrity management systems, and, in particular, systems and methods for monitoring structural damage and repairs, to ensure aircraft availability, performance and safety.

Aircraft may experience damage (for example, structural damage) that may require maintenance intervention. The severity of damage and the particular degree of maintenance intervention required may be difficult to determine without physical inspection by an appropriate technician. When damage occurs mid-mission, an appropriate technician may not be available for evaluating for structural damage or performing an integrity assessment and an aircraft may be unnecessarily grounded at a deployed location, which delays or prevents the aircraft from fulfilling the mission.

Accordingly, embodiments described herein provide a shorter, more efficient repair cycle by using connected inspection or structural health monitoring to assess scope of damage, which can be analyzed using a digital twin while also considering historical usage and current aircraft state as well as future intended use (e.g., as defined via a mission plan) to make an informed decision regarding whether to release the aircraft for mission or schedule maintenance.

For example, some embodiments described herein provide a structural integrity management system for an aircraft. The system includes an electronic processor configured to receive information regarding damage to a component of the aircraft, update a digital twin model associated with the aircraft based on the received information, and perform a rapid structural analysis using the updated digital twin model. The processor is further configured to determine, based on the results of the rapid structural analysis and either or both of a historic use of the aircraft and a current future usage profile of the aircraft, an actionable direction and perform the actionable direction.

Other embodiments described herein provide a method of maintaining an aircraft. The method includes receiving, at an electronic processor, information regarding damage to a component of the aircraft, updating a digital twin model associated with the aircraft based on the received information, and performing, via the electronic processor, a rapid structural analysis using the updated digital twin model. The method further includes determining via the electronic processor, based on the results of the rapid structural analysis and either or both of a historic use of the aircraft and a present future usage profile of the aircraft, an actionable direction and performing the actionable direction.

Other aspects will become apparent by consideration of the detailed description and accompanying drawings.
FIG. 1 is a block diagram of an aircraft maintenance system according to some embodiments.
FIG. 2 is a perspective view of an aircraft of the system of FIG. 1 according to some embodiments.
FIG. 3 is a block diagram of an electronic controller of the aircraft of FIG. 2 according to some embodiments.
FIG. 4 is a block diagram of a maintenance server of the system of FIG. 1 according to some embodiments.
FIG. 5 is a flowchart illustrating a method of maintaining the aircraft of FIG. 2 implemented by the system of FIG. 1 according to some embodiments.
FIG. 6A illustrates a damaged structural component of the aircraft of FIG. 2 according to some embodiments.
FIG. 6B illustrates a digital overlay of the damaged component of FIG. 6B according to some embodiments.

Before any embodiments are explained in detail, it is to be understood that the embodiments described herein are provided as examples and the details of construction and the arrangement of the components described herein or illustrated in the accompanying drawings should not be considered limiting. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and may include electrical connections or couplings, whether direct or indirect. Also, electronic communications and notifications may be performed using any known means including direct connections, wireless connections, and the like.

It should be noted that a plurality of hardware and software-based devices, as well as a plurality of different structural components may be utilized to implement the embodiments described herein or portions thereof. In addition, it should be understood that embodiments described herein may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects described herein may be implemented in software (stored on non-transitory computer-readable medium) executable by one or more processors. As such, it should be noted that a plurality of hardware and software-based devices, as well as a plurality of different structural components may be used to implement the embodiments described herein. For example, "controller," "control unit," and "control assembly" described in the specification may include one or more processors, one or more memory modules including non-transitory computer-readable medium, one or more input/output interfaces, and various connections (for example, a system bus) connecting the components.

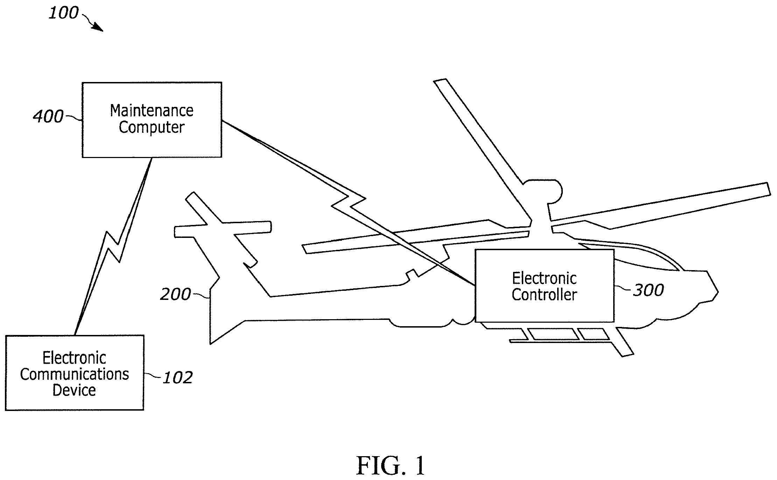

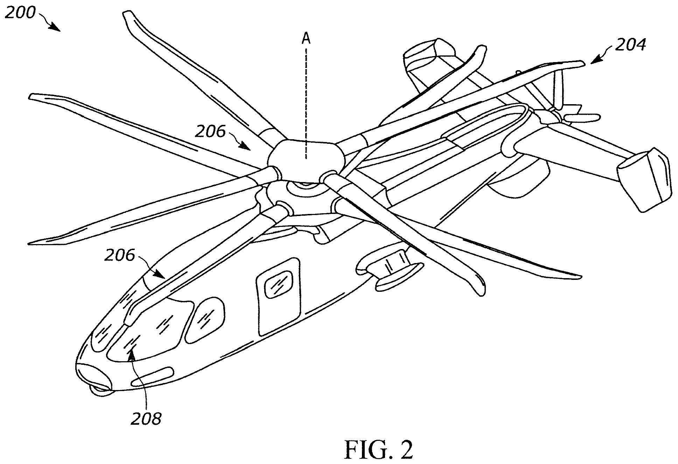

FIG. 1 illustrates an aircraft maintenance system 100 according to some embodiments. The system 100 includes an aircraft 200, which includes an electronic controller 300 (FIG. 2), and a maintenance computer 00. The electronic controller 300, as explained in more detail below, collects data regarding the aircraft 200 (for example, records flight information, operational information, state information, sensor output, or the like) and forward the data, or portion thereof, to the maintenance computer 400. It should be understood that the electronic controller 300 may be integrated into the aircraft 200, may be configured as a separate portable communications device, such as, for example, a smart phone, tablet computer, or the like, or a combination thereof. For example, in some embodiments, functionality described herein with respect to the electronic controller 300 may be distributed among multiple devices or components integrated in the aircraft or separate from the aircraft. As also explained in more detail below, the maintenance computer 400 makes maintenance decisions, including, for example, whether to release the aircraft 200 for mission or ground the aircraft 200 for repairs based on the received information.

As illustrated in FIG. 1, in some embodiments, the maintenance computer 400 is located external to the aircraft 200 and may communicate with the electronic controller 300 over a wired connection, a wireless connection, or a combination thereof. It should also be understood that the functionality described herein as being performed via the maintenance computer 400 may be distributed among multiple computers, such as, for example, multiple servers. Also, in some embodiments, some or all of the functionality described herein as being performed via the maintenance computer 400 may be performed locally on a device installed in or carried via the aircraft 200. For example, in some embodiments, a computing device, such as the electronic controller 300, installed in or carried via the aircraft 200 may be configured to perform the functionality described herein as being performed by the maintenance computer 400, which allows the maintenance decisions and related functionality to be performed even when the aircraft 200 has limited or no communication with a separate maintenance computer 400.

As illustrated in FIG. 1, in some embodiments, the system 100 may additionally include an electronic communications device 102. As described in more detail below, in some embodiments, the maintenance computer 400 is configured to generate and transmit data regarding maintenance decisions to the electronic communications device 102, which may be, for example, a portable device operated by the operator of the aircraft 200, a device operated by maintenance personnel, or a combination thereof.

It should be understood that the system 100 is provided as an example and, in some embodiments, the system 100 may include additional components. For example, the system 100 may include one or more aircrafts 200, maintenance computers 400, electronic controllers 300, electronic communications devices 102, or combinations thereof. Furthermore, the related methods described herein may be applied to more than one aircraft 200 concurrently.

As illustrated, the components of the system 100, such as the aircraft 200 and the maintenance computer 400, are communicatively coupled over one or more wireless or wired communication links, which may include dedicated communication channels, networks, or a combination thereof. Each communication link of the system 100 may be wired or implemented wirelessly using any suitable protocol. For example, each communication link may each be implemented using one or more of a wide area network, such as the Internet, a Long Term Evolution (LTE) network, a Global System for Mobile Communications (or Groupe Spécial Mobile (GSM)) network, a Code Division Multiple Access (CDMA) network, an Evolution-Data Optimized (EV-DO) network, an Enhanced Data Rates for GSM Evolution (EDGE) network, a 3G network, a 4G network, a 5G network, a local area network, for example a Wi-Fi network, a personal area network, for example a Bluetooth^{™} network, and combinations or derivatives thereof. For example, the electronic communications device 102, the controller 300, and the maintenance computer 400 may be configured for communications via one or more of the Internet (including public and private Internet Protocol (IP) networks), a Bluetooth network, a Wi-Fi network, for example operating in accordance with an Institute of Electrical and Electronics Engineers (IEEE) 802.11 standard (e.g., 802.11a, 802.11b, 802.11g, 802.11ax), a 3G standard network (including Global System for Mobiles (GSM) and Code Division Multiple Access (CDMA) standards), an LTE (Long-Term Evolution) network or other types of GSM networks, a 5G (including a network architecture compliant with, for example, the Third Generation Partnership Project (3GPP) Technical Specification (TS) 23 specification series and a new radio (NR) air interface compliant with the 3GPP TS 38 specification series) standard network, a Citizens Broadband Radio Service (CBRS), Worldwide Interoperability for Microwave Access (WiMAX) network, for example operating in accordance with an IEEE 802.16 standard, a Low Earth Orbit (LEO) network (e.g., for satellite phones or Internet connection), a Geosynchronous Orbit (GEO) network (e.g., for satellite phones), an Evolution-Data Optimized (EV-DO) network, an Enhanced Data Rates for Global Evolution (EDGE) network, or another similar type of wireless network.

FIG. 2 illustrates the aircraft 200 according to some embodiments. The aircraft 200 includes an airframe 202, which include one or more of structural elements such as, for example, wings, a fuselage, a tail assembly, landing gear, and the like. The aircraft 200, in the illustrated example, is a co-axial rotary wing aircraft 200 (for example, a helicopter) with an extending tail 204 including a dual, counter rotating, co-axial main rotor assembly 206 that rotates about an axis A. Although FIG. 2 illustrates a particular kind of aircraft 200, it should be understood that the aircraft 200 may be any kind of aerial vehicle (for example, airplanes, airships, jets, drones, etc.). The airframe 202, in some embodiments, includes a cockpit 208. In some embodiments, the cockpit 208 may include one or more seats for flight crew (e.g., pilot and co-pilot) and optional passengers. In some embodiments, the aircraft 200 is a partially-autonomous or fully-autonomous aerial vehicle. In some embodiments, the aircraft 200 is an unmanned, remotely-operated vehicle.

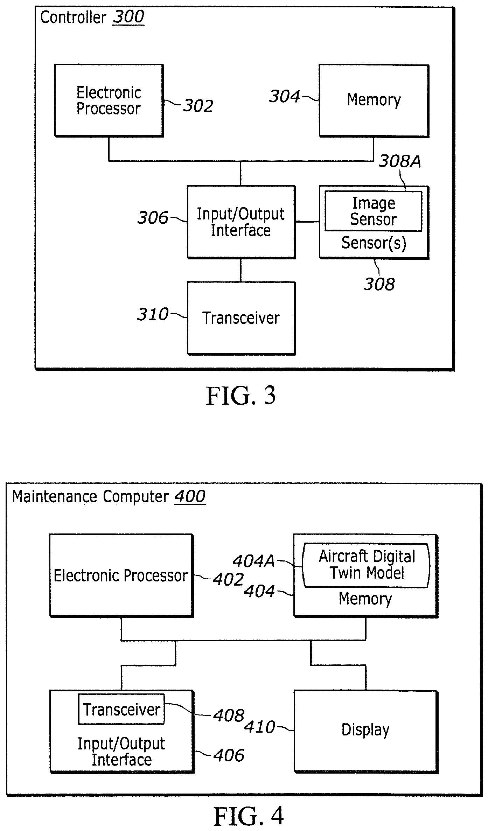

As mentioned above, the aircraft 200 includes, among other things, the electronic controller 300. As illustrated in FIG. 3, the electronic controller 300 includes an electronic processor 302 (for example, a microprocessor, application-specific integrated circuit (ASIC), or another suitable electronic device), a memory 304 (for example, a non-transitory, computer-readable storage medium), and an input/output interface 306. The controller 300 is configured to receive information (via the input/output interface 306) from one or more sensors 308. The electronic controller 300 further optionally includes, as part of the input/output interface 306, a transceiver 310 for communicating with one or more components of the system 100 and, in some embodiments, one or more additional communication networks or connections. The electronic controller 300 also includes electrical and electronic components (not shown) that provide power, operation control, and protection to the components and modules within the electronic controller 300. The illustrated components, along with other various modules and components are coupled to each other by or through one or more control or data buses that enable communication therebetween. The use of control and data buses for the interconnection between and exchange of information among the various modules and components would be apparent to a person skilled in the art in view of the description provided herein. FIG. 3 illustrates only one example embodiment of the controller 300. The controller 300 may include fewer or additional components and may perform functions other than those explicitly described herein.

The electronic controller 300, as mentioned above, may be integrated into the aircraft 200, such as, for example, being integrated in or part of a main electrical control unit system of the aircraft 200. However, in other embodiments, the electronic controller 300 may be a separate electronic device (for example, an electronic flight bag device, a tablet computer carried by the operator of the aircraft 200, or the like).

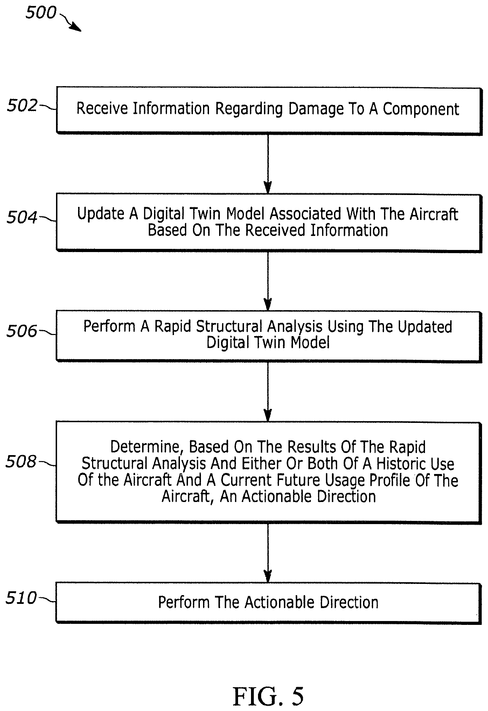

The memory 304 may include a program storage area and a data storage area. The processor 302 is connected to the memory 304 and executes computer readable code ("software") stored in a random access memory (RAM) of the memory (for example, during execution), a read only memory (ROM) of the memory (for example, on a generally permanent basis), or another non-transitory computer readable medium. Software included for the processes and methods for identification and configuration of each electronic device can be stored in the storage memory 304. The software may include firmware, one or more applications, program data, filters, rules, one or more program modules, and/or other executable instructions. The processor 302 is configured to retrieve from the memory 304 and execute, among other things, instructions related to the processes and methods described herein (for example, the method 500 of FIG. 5 described below). In some embodiments, some or all of the software and data stored in the memory 304 may also be stored in and retrieved from one or more data storage devices or memory modules (not shown) remote from the aircraft 200 (for example, within the maintenance computer 400).

The input/output interface 306 is configured to receive input and to provide system output. The input/output interface 306 obtains information and signals from, and provides information and signals to, (for example, over one or more wired and/or wireless connections) devices both internal and external to the controller 300 (for example, to and from one or more systems of the aircraft 200, such as, for example one or more electronic control units or system of the aircraft 200). In some embodiments, the electronic controller 300 may not receive some or any information regarding the aircraft 200 directly from the electronic control unit system of the aircraft 200. For example, the controller 300 may be configured to receive information regarding the aircraft 200 from one or more other remote devices/systems (for example, an aircraft control base station, an electronic communications device, a database, a server, an operator of the aircraft 200, or the like).

The electronic controller 300 receives information (via the input/output interface 306) from one or more sensors 308. The sensors 308 may be integrated into the aircraft 200, separate from the aircraft 200 (for example, integrated into a separate electronic communication or imaging device), or a combination of both. The one or more sensors 308 include one or more kinds of sensor (e.g., image sensors, current sensors, pressure sensors, temperature sensors, flow sensors, humidity sensors, pressure sensors, etc.), configured to collect information regarding one or more characteristics of the aircraft 200. The information collected by the sensors 308 is utilized by the processor 302 (and/or the maintenance computer 400) to determine a present state of the aircraft 200 (for example, of one or more subsystems/components thereof). In particular, the sensor information, as explained in more detail below, is used to update a digital twin model (explained in more detail below) of the aircraft 200.

The sensors 308 may include, for example, one or more image sensors 308A. The image sensor(s) 308A are configured to capture images of at least a portion of the aircraft 200. The captured portion may be an internal or external portion of the aircraft 200. It should be noted that the terms "image" and "images," as used herein, may refer to one or more digital images captured by the image sensor 308A or processed by the electronic processor 302. Further, the terms "image" and "images," as used herein, may refer to still images or sequences of images (that is, a video stream).

As mentioned above, the input/output interface 306 of the electronic controller 300 may include a transceiver 310. The transceiver 310 is configured to transfer and receive information with one or more communication links or communication networks. For example, the transceiver 310 may be configured to perform communications via one or more of the networks mentioned above.

The transceiver 310 may also comprise one or more wired transceivers, such as an Ethernet transceiver, a USB (Universal Serial Bus) transceiver, or similar transceiver configurable to communicate via a twisted pair wire, a coaxial cable, a fiber-optic link, or a similar physical connection to a wired network.

The electronic processor 302, the memory 304, the input/output interface 306, the sensors 308, and the transceiver 310 may include various digital and analog components, which for brevity are not described herein and which may be implemented in hardware, software, or a combination of both. Some embodiments include separate transmitting and receiving components, for example, a transmitter and a receiver, instead of a combined transceiver 310.

The electronic processor 302, the memory 304, the input/output interface 306, the sensors 308, the transceiver 310, other components of the controller 300, or a combination thereof may communicate over one or more communication lines or buses, or combination thereof. As described more particularly below, in some embodiments, the electronic controller 300 stores and exchanges information regarding the aircraft 200 (for example, sensor data from one or more of the sensors 308) with the maintenance computer 400 and, in some embodiments, with other computing devices (for example, the electronic communications device 102).

In some embodiments, the maintenance computer 400 and the electronic communications device 102 include similar components as the electronic controller 300. For example, as illustrated in FIG. 4, the maintenance computer 400 includes, among other things, an electronic processor 402 (for example, a microprocessor, application-specific integrated circuit (ASIC), or another suitable electronic device), a memory 404 (for example, a non-transitory, computer-readable storage medium), and an input/output interface 406. The input/output interface 406 of the computer 400 may include a transceiver 408, which allows the maintenance computer 400 to communicate with external devices or system, such as the electronic controller 300, the electronic communications device 102, or a combination thereof. The illustrated components, along with other various modules and components (not shown) are coupled to each other by or through one or more control or data buses (for example, a communication bus) that enable communication therebetween. The use of control and data buses for the interconnection between and exchange of information among the various modules and components would be apparent to a person skilled in the art in view of the description provided herein. FIG. 4 illustrates only one example embodiment of the maintenance computer 400. The maintenance computer 400 may include fewer or additional components and may perform functions other than those explicitly described herein.

The electronic processor 402 obtains and provides information (for example, from the memory 404, the input/output interface 406, and/or the transceiver 408), and processes the information by executing one or more software instructions or modules, capable of being stored, for example, in a random access memory ("RAM") area of the memory 404 or a read only memory ("ROM") of the memory 404 or another non-transitory computer readable medium (not shown). The software can include firmware, one or more applications, program data, filters, rules, one or more program modules, and other executable instructions. The electronic processor 402 is configured to retrieve from the memory 404 and execute, among other things, software related to evaluating a structural health of an aircraft (for example, the aircraft 200).

The memory 404 can include one or more non-transitory computer-readable media and may include a program storage area and a data storage area. The program storage area and the data storage area may include the same type of memory or combinations of different types of memory. In the embodiment illustrated, the memory 404 stores, among other things, a digital twin model 404A.

The aircraft digital twin model 404A is a digital replica of the aircraft 200 representing, in particular, a current state of the aircraft 200. The current state includes information relating to a present condition one or more particular components of the airframe 202, including, for example, the structure itself, such as the airframe 202, a rotating component, or the like, or one or more systems of the aircraft 200, such as, for example, an electrical system of the aircraft 200, a fuel system of the aircraft 200, or a combination thereof. The digital twin model 404A may be a standard model for the particular type of aircraft (usable for all instances of the aircraft type) or may be specific to a particular aircraft (e.g., the aircraft 200) in some embodiments. The aircraft digital twin model 404A may include additional information such as aircraft configuration, maintenance history, operational history, design information, and the like. As explained in more detail below, the maintenance computer 400 is configured to update the digital twin model 304A based on information received from the electronic controller 300 (for example, sensor information, operational information, flight plan information, which is described in more detail below). The maintenance computer 400, the electronic controller 300, or a combination thereof may be configured to repeatedly update the digital twin model 304A based on new received information regarding the aircraft 200. In some embodiments, the memory 404 may include digital twin models of one or more aircrafts. Also, in some embodiments, the memory 404 may store multiple digital twin models of the same aircraft, such as, for example, models that represent the same aircraft at one or more historical points in time, one or more future points in time, or a combination thereof.

Referring back to FIG. 3, it should be noted that, in some embodiments, the electronic controller 300 may also store and update a digital twin model (not shown), or a portion thereof, locally (for example, within the memory 304). In such embodiments, the electronic controller 300 may also be configured to update the locally stored digital twin model, or portion thereof, using one or more processes similar to those implemented by the maintenance computer 400 as described herein. The controller 300 may then transmit the updated model to the maintenance computer 400, and the maintenance computer 400 may use the received model to update the digital twin model 404A stored in memory 404. This may be advantageous, for example, in instances where the aircraft 200 may not be able to communicate with external systems, such as the maintenance computer 400, or access reliable or secure communication links to do so. For example, before the aircraft 200 initiates a flight plan, the controller 300 may receive a latest version of the digital twin model 404A (or, a sub-portion thereof) from the maintenance computer 400. During operation of the flight plan, the controller 300 may update the locally stored digital twin model based on received information (for example, from the sensors 308) to maintain an up-to-date digital twin model. It may be advantageous in some instances for the controller 300 to store a portion of the digital twin model 404A (i.e., a less detailed version of the digital twin model) as compared to the version stored in the maintenance computer 400 to save, for example, bandwidth, processing, and memory requirements, which may be limited onboard the aircraft 200 or within a portable device carried by an operator of the aircraft 200.

Returning to FIG. 4, the input/output interface 406 is configured to receive input and to provide system output. The input/output interface 406 obtains information and signals from, and provides information and signals to, (for example, over one or more wired and/or wireless connections) devices both internal and external to the maintenance computer 400 (for example, to and from the controller 300 and/or the electronic communications device 102).

As noted above, the input/output interface 406 may include the transceiver 408. The transceiver 408 is configured to communicate with one or more communication links or communication networks used to communicate with other components or computing devices. For example, the transceiver 408 may be configured to communicate via one or more networks similar to those described above regarding the transceiver 310 of FIG. 3.

The maintenance computer 400, via the input/output interface 406, receives information regarding the aircraft 200 (for example, from the electronic controller 300, the electronic communications device 102, or a combination thereof). In some embodiments, the maintenance computer 400 is part of a structural health monitoring system. In such embodiments, the maintenance computer 400 is configured to perform structural health monitoring to assess the structural integrity of one or more components (for example, of the aircraft 200) to automatically detect damage (e.g., to the airframe 202) of the aircraft 200 based on information from one or more sensors (for example, one or more of the sensors 308). For example, the maintenance computer 400 may receive information from the one or more of the sensors 308 regarding a magnitude and distribution of force(s) on the airframe 202 (for example, via one or more load cells), a deflection (for example, via one or more transducers), strain (for example, via one or more strain gauges), temperature and temperature variations within and/or surrounding the aircraft 200, acceleration, windspeed and pressure, acoustic emissions (for example, via a microphone), one or more images of the aircraft 200 or a component thereof, and the like.

The load information may be evaluated to determine whether an unexpected load or distribution thereof is applied to a structural component of the aircraft 200 (in particular, of the airframe 202). Acceleration information, wind speed, pressure information, or a combination thereof may be used to determine the particular load and distribution thereof caused by the respectively resulting aerodynamic forces that are applied to a structural component. Deformation information may be utilized to determine whether a deflection of a structural component of the aircraft is outside of a tolerable limit. Similarly, strain information may be used to determine whether a strain of a structural component is outside of a tolerable limit, which may suggest a failure in the integrity of the component. Temperature information may be utilized to determine potential damage to a structural component (for example, increased strain) due to differential thermal expansion resulting from variations in temperature. Similarly, acoustic emission information may be utilized to detect breakage of a structural component and identify the particular location of the breakage (for example, using triangulation and/or the image information).

The sensor information, in some embodiments, may be obtained from one or more systems/databases remote from the computer 400 (for example, the controller 300). The one or more systems/databases, in some embodiments, may be alternatively or additionally remote from the aircraft 200.

In some embodiments, the maintenance computer 400 includes a display 410. The display is a suitable display such as, for example, a liquid crystal display (LCD) touch screen, or an organic light-emitting diode (OLED) touch screen. In some embodiments, the maintenance computer 400 implements a graphical user interface (GUI) (for example, generated by the electronic processor 402, from instructions and data stored in the memory 404, and presented on the display 410), that enables a user to interact with the maintenance computer 400. In some embodiments, the maintenance computer 400 enables display remotely, for example, using a display of the electronic communications device 102, a display of the electronic controller 300, or a combination thereof. In some embodiments, the maintenance computer 400 operates using, among other things, augmented reality technology, where video streams are displayed (for example, on the display 410 or the electronic communications device 102) with text, graphics, or graphical user interface elements superimposed on or otherwise combined with the video stream's images.

The electronic processor 402, the memory 404, the input/output interface 406, the transceiver 408, and the (optional) display 410 may include various digital and analog components, which for brevity are not described herein and which may be implemented in hardware, software, or a combination of both. Some embodiments include separate transmitting and receiving components, for example, a transmitter and a receiver, instead of a combined transceiver 408. Also, in some embodiments, a separate computer with a display (e.g., a personal computer, laptop computer, tablet computer, smart phone, or the like) connects to the maintenance computer to provide user interaction and interfaces as described above.

In some embodiments, the maintenance computer 400 uses various machine learning methods to analyze the data received, for example, from the electronic controller 300 and make determinations regarding the analytics systems and policies (for example, to improve the rapid structural analysis function and/or determination of an actionable direction, described in more detail below). Machine learning generally refers to the ability of a computer program to learn without being explicitly programmed. In some embodiments, a computer program (sometimes referred to as a learning engine) is configured to construct a model (for example, one or more algorithms) based on example inputs. Supervised learning involves presenting a computer program with example inputs and their desired (actual) outputs. The computer program is configured to learn a general rule (a model) that maps the inputs to the outputs in the training data. Machine learning may be performed using various types of methods and mechanisms. Example methods and mechanisms include decision tree learning, association rule learning, artificial neural networks, inductive logic programming, support vector machines, clustering, Bayesian networks, reinforcement learning, representation learning, similarity and metric learning, sparse dictionary learning, and genetic algorithms. Using some or all of these approaches, a computer program may ingest, parse, and understand data and progressively refine models for data analytics, including image analytics. Once trained, the computer system may be referred to as, among other things, an intelligent system, an artificial intelligence (AI) system, or a cognitive system.

It should be understood that the maintenance computer 400, as mentioned above, may include additional components than those illustrated in FIG. 4 in various configurations and may perform additional functionality than the functionality described in the present application. Also, it should be understood that the functionality described herein as being performed by the maintenance computer 400 may be distributed among multiple devices, such as multiple servers, multiple controllers (for example, the electronic controller 300), or a combination thereof and may be provided through a cloud computing environment, accessible by components of the system 100. For example, in some embodiments, the memory 404 is part of a database separate from the maintenance computer 400. As another example, the structured health monitoring is implemented on a separate device (for example, the electronic controller 300, the electronic communications device 102, or the like).

Returning to FIG. 1, as mentioned above, the electronic communications device 102 includes components similar to those of the controller 300 and computer 400. The electronic communications device 102 is an electronic device capable of communicating with the controller 300, the maintenance computer 400, or a combination thereof as described herein. The electronic communications device 102 may be, for example, a server (for example, part of a repair operations dispatch system) or a portable communications device, such as, for example, a mobile two-way radio, a smart telephone, a smart watch, a laptop computer, a tablet computer, or other similar device capable of operating as described herein. For example, the electronic communications device 102 may be a portable device operated by the operator of the aircraft 200, a device operated by maintenance personnel (for example, associated with a repair operations station), or a combination thereof.

FIG. 5 illustrates an example method 500 for of maintaining an aircraft (for example, the aircraft 200). Although the method 500 is described in conjunction with the system 100 as described herein, the method 500 could be used with other systems and devices. In addition, the method 500 may be modified or performed differently than the specific example provided.

As an example, the method 500 is described as being performed by the maintenance computer 400 and, in particular, the electronic processor 402. However, it should be understood that in some embodiments, portions of the method 500 may be performed by other devices, including for example, the electronic controller 300. Additional electronic processors may also be included in the electronic controller 300, the maintenance controller 400, or a combination thereof that perform all or a portion of the method 500. For ease of description, the method 500 is described in terms of a single aircraft 200 and a single relevant digital twin model 404A. However, the method 500 may be applied to multiple aircrafts and relevant digital twin models.

The method 500 is also described in terms of structural damage (e.g., damage to the airframe 202 of the aircraft 200), but it should be understood that the method 500 may be implemented to detect and analyze other kinds of damage to other components or subsystem of the aircraft 200. For example, the determined damage may be related to an electrical failure, hydraulic failure, air pressure abnormality or failure, or a combination thereof.

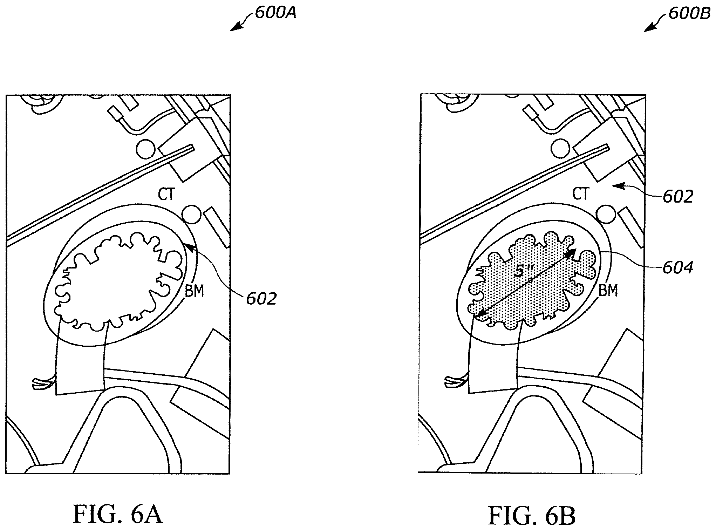

At block 502, the electronic processor 402 receives information regarding damage to a component of the aircraft 200. The information may include sensor information received from the one or more sensors 308 of the aircraft 200. For example, the electronic processor 402 may receive an image 600A (FIG. 6A) of a damaged component from the image sensor 308A. As illustrated in FIG. 6A, the image 600A of a structurally-damaged area 602 (i.e., a hole) of the airframe 202 of the aircraft 200. The image 600A may be captured by the image sensor 308A and provided (for example, from the controller 300 via the transceiver 310) to the maintenance computer 400. The electronic processor 402 may receive the sensor information relative to the damaged area automatically (for example, from the controller 300) in some embodiments. Some of the sensor information may be sent manually by a user. For example, a user may use a portable electronic device (for example, a smartphone/tablet) to capture an image of the damaged area and transmit the image to the maintenance computer 400. In some embodiments, the user may annotate the image to indicate a particular location within the image of the damage and transmit the annotated image to the maintenance computer 400. In some embodiments, the electronic processor 402 is configured to automatically identify physical damage based on sensor information (for example, identify an area of damage based on an image) according to one or more automated damage detection and characterization algorithms.

At block 504, the electronic processor 402 updates the digital twin model 304A associated with the aircraft 200 based on the received sensor information and, at block 506, the electronic processor 402 performs a rapid structural analysis using the updated model 404A. A rapid structural analysis is a predicative function that determines a physical response to a structure (for example, the airframe 202 of the aircraft 200) that is induced when an external force (for example, lift, weight, thrust and/or drag) is applied to the structure. During the rapid structural analysis, following determination of damage and identification of the location of the damage, the electronic processor 402 may determine a severity of the damage. The electronic processor 402 then may perform a residual structural strength determination assessment according to previously-developed information of a damage tolerance of the structure associated with the current failure to determine what degree of damage may be safely tolerated. The electronic processor may alternatively or additionally use one or more trained reduced-order structural analysis models. Such models may be implemented on a low compute resource such as a hand-held device (for example, the electronic communications device 102).

In some embodiments, the processor 402 utilizes a future usage profile (for example, -stored in the memory 404 or received remotely from another device, such as from the controller 300) in performing the rapid structural analysis. The future usage profile includes navigational and future intended use information for the aircraft 200. For example, the future usage profile may include flight plan information, environmental information, duration of flight information, altitude range, intended destination, and the like. In some embodiments, the future usage profile may include information regarding a military mission assigned to an operator of the aircraft 200.

At block 508, the electronic processor 402 determines, based on the results of the rapid structural analysis (and either or both of a historic use of the aircraft and a present future usage profile of the aircraft 200), an actionable direction and executes the actionable direction (block 510). The historic use of the aircraft 200 may include either or both previous future usage profile information and previous digital twin models. Some or all historic use information may be stored locally on the maintenance computer 400 or remotely (for example, at the controller 300). The electronic processor 402 utilizes the future usage profile to determine additional information such as how far the aircraft 200 will to travel, a type of flying necessary to complete a mission (e.g., surveillance versus combative, high or low altitude, travel speed, or the like), a travel environment (for example, whether the planned flight path will be overland, over a body of water, or the like), and similar flight conditions or requirements. In some embodiments, the electronic processor 402 utilizes the historic use information when performing the rapid structural analysis at block 506. The electronic processor 402 may also determine the actionable direction based on the results of a structural health monitoring system (for example, performed by the electronic processor 402 or received from another device, such as, for example, the electronic controller 300). The particular actionable direction may be determined, for example, according to the degree of damage of the present failure compared to the determined tolerance, as determined by the electronic processor 402 according to the results of the rapid structural analysis.

The actionable direction is a command implemented by the maintenance computer 400 to address the determined state of the aircraft 200 (including the damaged component). The actionable direction may be, for example, generating and transmitting an alert (visual, audio, or some combination thereof) to the electronic communications device 102 and/or to the controller 300. In some embodiments, the actionable direction may be to modify/update one or more of a future usage profile.

The particular actionable direction depends on an immediate or predicted severity of the damaged component determined at block 508. In instances where the processor 402 determines that the severity of the damage is or will be (should the aircraft 200 proceed to be operated according to the future usage profile information) below one or more of a predetermined threshold, the actionable direction may be a notification to the controller 300 that the aircraft 200 may proceed to be operated according to the future usage profile. Such thresholds may be hard-coded into the system 100. In some embodiments, the electronic processor 402 is configured to automatically generate one or more of the predetermined thresholds according to historic rapid structural analysis information performed by the system 100 itself and/or one or more other similar systems.

In instances where the severity exceeds one or more predetermined thresholds, the electronic processor 402 is configured to alert one or more users (for example, an operator of the aircraft 200) that the aircraft 200 is not in condition to implement the future usage profile. The electronic processor 402 may further determine, based on the particular kind of damage to the relevant component(s), or a combination thereof what action is required to address the damage and what level of maintenance intervention, if any, may be necessary. For example, in instances where the damage may be corrected by an operator of the aircraft 200, the actionable direction may include generating and transmitting a notification to the operator of the aircraft 200 (for example, to the controller 300) with instructions to repair the particular damage. In instances where the electronic processor 402 determines that the damage may require maintenance intervention outside of an operator of the aircraft 200, the actionable direction includes transmitting a request for maintenance intervention to a remote electronic communications device (for example, the electronic communications device 102) to accordingly notify another user (for example, a maintenance operator/engineer) about the particular damage to the aircraft 200. The notification may also include instructions for repairing the determined damage, such as, for example, an electronic version of a field manual.

In some embodiments, the electronic processor 402 is further configured to generate a digital overlay of a repair to address the damage on the digital twin and transmit, with the request/notification, the digital overlay. For example, FIG. 6B is an example digital overlay image 600B according to some embodiments. The image 600B is a modified version of the image 600A of FIG. 6A and includes a digital overlay 604 of a repair applied to the area 602 addressing the damage. As illustrated, the digital overlay 604 is of a patch to cover, and thus repair, the structurally-damaged area 602. In some embodiments, in addition to generating a digital overlay and transmitting the digital overlay (for example, to the controller 300 and/or the electronic communications device 102), the maintenance computer 400 is further configured to transmit digital overlays illustrating one or more particular intermediate stages of the repair (for example, at one or more predicted steps in the repair). In some embodiments, the digital overlay includes one or more dimension overlays indicating a size of an affected structure associated with the damage.

In some embodiments, the actionable direction may further include requesting confirmation that the damaged component has been repaired and, upon receiving confirmation, updating the digital twin model 404A (for example, by requesting additional sensor information from the controller 300). In some embodiments, the maintenance computer 400 is configured to train a model (e.g., using supervised learning) with structural models of other aircrafts and established decisions (e.g., clearances, groundings, repairs, or the like). The maintenance computer 400 may accordingly utilize such information in the updating of the digital twin model 404A and/or in performing the rapid structural analysis and/or determination of an actionable direction.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and integrated circuits (ICs) with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

Various features and advantages of the embodiments described herein are set forth in the following claims.

## Claims

1. A structural integrity management system for an aircraft, the system comprising:
an electronic processor configured to
receive information regarding damage to a component of the aircraft,
update a digital twin model associated with the aircraft based on the received information,
perform a rapid structural analysis using the updated digital twin model,
determine, based on the results of the rapid structural analysis and either or both of a historic use of the aircraft and a current future usage profile of the aircraft, an actionable direction, and
perform the actionable direction.

2. The system of claim 1, wherein the electronic processor is configured to perform the actionable direction by transmitting, via a transceiver, a request for maintenance intervention to a remote electronic communications device.

3. The system of claim 1 or 2, wherein the electronic processor is further configured to
generate a digital overlay of a repair to address the damage on the digital twin; and
transmit via a transceiver, with the request, the digital overlay.

4. The system of one of claims 1-3, wherein the determination of an actionable direction is further based on a residual structural strength determination assessment.

5. The system of one of claims 1-4, wherein the future usage profile includes at least one selected from a group consisting of environmental information, duration, altitude range, and destination.

6. A method of maintaining an aircraft, the method comprising:
receiving, at an electronic processor, information regarding damage to a component of the aircraft;
updating a digital twin model associated with the aircraft based on the received information;
performing, via the electronic processor, a rapid structural analysis using the updated digital twin model;
determining via the electronic processor, based on the results of the rapid structural analysis and either or both of a historic use of the aircraft and a current future usage profile of the aircraft, an actionable direction; and
performing the actionable direction.

7. The method of claim 6, wherein performing the actionable direction includes transmitting, via a transceiver, a request for maintenance intervention to a remote electronic communications device.

8. The method of claim 6 or 7, the method further comprising
generating a digital overlay of a repair to address the damage on the digital twin, and
transmitting, with the request, the digital overlay.

9. The method of one of claims 6-8, wherein the determination of an actionable direction is further based on a residual structural strength determination assessment.

10. The method of one of claims 6-9, wherein the future usage profile includes at least one selected from the group consisting of flight plan information, environmental information, duration, altitude range, and destination.
